# EUROPEAN PATENT SPECIFICATION

(11) **EP 0 775 571 B1**
(45) Date of publication and mention of the grant of the patent: **07.04.2004**
(21) Application number: 96307055.2
(22) Date of filing: 27.09.1996
(51) Int. Cl.: B29D 11/00, B29C 37/00

(54) **Infra-red heat source for demolding contact lenses**
Infrarotquelle zur Entnehmung von Kontakt-Linsen
Une source thermique à infrarouges pour la démoulage de lentilles de contact

(30) Priority: 21.11.1995 US 535996
(43) Date of publication of application: 28.05.1997
(73) Proprietor: Johnson & Johnson Vision Care, Inc., Jacksonville, FL 32256 (US)
(72) Inventor: Martin, Wallace A., Orange Park, Florida 32065 (US); Dagobert, Henri, Jacksonville, Florida 32217 (US); Ross, Denwood, Green Cove Springs, FL 32043 (US); Beaton, Steve, Neptune Beach, Florida 32266 (US); Walker, Craig, Jacksonville, Florida 32224 (US); Pegram, Steve, Gainesville, Florida 32608 (US); Andersen, Finn, 2950 Vedbaek (DK); Kindt-Larsen, Ture, 2840 Holte (DK); Davis, Welton Ivan, III, Jacksonville, Florida 32246 (US); Mosier, Kent Dwayne, Jacksonville, Florida 32259 (US)
(74) Representative: Mercer, Christopher Paul

(56) References cited:
- EP-A- 0 588 660
- EP-A- 0 686 485
- EP-A- 0 686 487
- EP-A- 0 750 981
- PATENT ABSTRACTS OF JAPAN vol. 014, no. 122 (P-1017), 7 March 1990 & JP 01 316702 A (MITSUBISHI RAYON CO LTD), 21 December 1989,
- PATENT ABSTRACTS OF JAPAN vol. 006, no. 249 (M-177), 8 December 1982 & JP 57 146629 A (HITACHI SEISAKUSHO KK), 10 September 1982,

## Description

This invention relates generally to the production of ophthalmic lenses, and, in particular to a method and a device for removing molded soft contact lenses, high-precision intraocular lenses, and the like, from the individual molds in which they are produced.

As the ophthalmic contact lens industry has grown, it has become desirable to supply contact lenses that are periodically and frequently replaced to minimize the possibility of user induced contamination. This has produced an opportunity for manufacturers to strive for automated methods and apparatuses that are able to automatically produce high quality ophthalmic lenses in a cost-effective and highly efficient manner.

It is current practice in the art of making ophthalmic lenses, such as soft contact lenses of the hydrogel type, to form a monomer or monomer mixture that may be polymerized in a plastic mold. Details of typical direct mold processes for forming soft hydrogel contact lenses can be found in U.S. patents 5,080,839, 5,039,459, 4,889,664, and 4,495,313. The process for forming soft contact lenses as generally described in the above-mentioned patents includes the steps of dissolving a monomer mixture in a non-aqueous, water-displaceable solvent and placing the monomer/solvent mixture in a mold having the shape of the final desired hydrogel lens. Next, the monomer/solvent mixture is subjected to conditions whereby the monomer(s) polymerize, to thereby produce a polymer/solvent mixture in the shape of the final desired hydrogel lens. After the polymerization is complete, the solvent is displaced with water to produce a hydrated lens whose final size and shape are similar to the shape of the original molded polymer/solvent article.

Examples of typical plastic molds used for carrying the polymerizable feed material are disclosed in U.S. Patent Nos. 5,094,609, 4,565,348 and 4,640,489. The mold disclosed in U.S. Patent 4,640,489 is a two-piece mold with a female mold portion having a generally concave lens surface, and a male mold portion having a generally convex lens surface, both mold portions preferably made of a thermoplastic material such as polystyrene. As discussed in U.S. Patent 4,640,489, polystyrene and copolymers thereof is a preferred mold material because it does not crystallize during cooling from the melt, and exhibits little or no shrinkage when subject to the processing conditions required during the direct molding process discussed above. Alternatively, molds made of polypropylene or polyethylene, such as described in U.S. Patent No. 4,121,896, may be used.

During the molding process, the monomer and monomer mixture is supplied in excess to the female concave mold portion prior to the mating of the molds. After the mold portions are placed together, defining the lens and forming a lens edge, the excess monomer or monomer mixture is expelled from the mold cavity and rests on or between flanges that surround one or both mold portions. Upon polymerization this excess material forms an annular (HEMA) ring around the formed lens between the flange portions of the molds.

As discussed in the above-mentioned U.S. Patent Nos. 5,039,459, 4,889,664, and 4,565,348, there is the requirement that the materials, chemistry, and processes be controlled so that the mold portions may be separated without having to apply an undue force, which may be necessary when the lens sticks to one or more of the lens mold or when the lens mold portions are adhered to each other by the excess HEMA ring after polymerization.

The prior art process for separating the mold portions and removing the lens therefrom consists of a heating stage, a mold half separation stage, and a lens removal stage. The heating stage of the prior art lens removal process is to apply heated air to the back mold portion thereby causing a differential expansion between the heated mold polymer and the cooler lens polymer. This differential expansion provides a shearing impetus which weakens the adhesion forces between the mold surface and the lens formed thereon. The mold half separation stage, which follows the heating stage is characterized by removal of the previously heated mold half. With respect to prior art systems for removing the back curve mold halves, inefficient means and damaging forces associated therewith have rendered such devices undesirable for producing high quality lenses inasmuch as the steps of heating and separation that break the polymerized lens/polymer mold adhesion and provide access to the nearly formed lens occasionally damage the lens, decreasing the yield rate of the process.

One such prior art process is disclosed in EP-A-0 588 660. This process involves the use of laser heating and lens separation by rotation.

With respect to the temperature gradient between the mold halves and the lens, the larger the thermal gradient, the more reduced the residual adhesion forces will be between the lens and the mold halves, and correspondingly, the more reduced the force required to separate the mold portions will be. Conversely, the lower the thermal gradients created between the mold halves and the lens, the greater the required force to separate the mold portions will be. Greater forces required in separating the mold from the lens, the greater the possibility of fracturing a mold portion and/or damaging the lens. It shall be understood, further, that a process in which a thermal gradient must be applied on a repeated basis must be such that the environment does not heat appreciably, therein reducing the effectiveness of the process.

With respect to the separation of the mold halves, and thereby, the separation of the top mold half from the lens, it is understood that devices must be employed which do not damage, or apply undue stress on the contact lenses. When front and back curve mold parts, which are designed to form an integral frame such as are illustrated in U.S. Patent No. 4,640,489, are placed together to form a lens shaped volume therebetween, the resultant combined structure provides limited accessible space for a separating means to engage and displace one mold from the other. Even minimal warpage of either mold half can adversely affect both accessibility to the space as well as the accuracy of the displacing forces.

The same requirements apply to the removal of the lens from the mold section in which it remains after separation.

It is, therefore, a principal object of the present invention to provide an efficient and reliable means for applying a strong thermal gradient to the unseparated mold sections, therein providing a sufficient relative shear force to break the adhesion between the contact lens and the mold section.

It is another object of the present invention to provide a method and apparatus that can easily and consistently separate the contact lens mold portions having a contact lens formed therebetween without damaging the lens.

It is another object of the present invention to provide an automated means to mechanically and reliably separate the mold halves apart in a consistent and reliable manner to thereby enhance the production of defect free lenses, and minimize damage to the lens or the breakage of the lens mold parts.

It is another object of the invention to perform such separation without excessive environmental heating or waste of energy.

Another object of the instant invention is to reduce contact lens manufacture process time by separating the greatest number of back curves from front curves in a rapid manufacturing line thereby permitting the fast and efficient production of hydrophilic contact lenses.

These and other objects are attained by an apparatus for demoulding a contact lens as defined in claim 1. The apparatus includes means for separating a back mold half from a front mold half of a contact lens mold assembly useful in the production of contact lenses. Each of the front and back mold halves has a central curved section defining opposing concave and convex surfaces, and also has a circular circumferential flange which extends outward from the central portion. The concave surface of the front curve provides the shape defining surface of the front portion of the contact lens. Conversely, the convex surface of the back curve mold half provides the shape defining surface of the back portion of the contact lens. The fabrication of the contact lens, as set forth conceptually hereinabove, is carried out by placing a predetermined amount of monomer in the concave portion of the front curve, positioning the convex surface of the back curve mold section into the concave portion of the front curve mold section, and subsequently subjecting the monomer to a curing agent, therein providing the lens shape to the hydrophilic material. The paired front and back curve mold sections are transported through much of the fabrication line on pallets, each pallet containing a plurality of paired curve molds wherein the back curve rests on top of the front curve.

The mold separating and lens removal apparatus, is positioned in the manufacturing line at a position downstream from the station wherein the lens material is cured. As stated above, it is understood that the greater the thermal gradient, the greater the effectiveness of the adhesion breaking. Temperature gradient ranges from about 2.5°C to 12°C are desirable.

The infra-red energy may be directed at the back curve via a reflective tube(s) or buffer(s).

Once the temperature gradient has weakened the adhesion forces between the back curve mold sections and the corresponding lenses, the portion of the apparatus which is directed to the separation of the mold sections is introduced between the front and back curve mold sections. An apparatus for preforming this separation is similarly described in each of the co-pending applications set forth above.

In the preferred embodiment, the separation apparatus comprises two pair of opposing thin shims, oriented parallel to the direction of the advancing pallet, which are initially disposed on top of one another, and which together slide between the lateral extending flanges of corresponding front and back curves. Once so positioned, the upper ones of each pair shims is raised, therein lifting the back curve molds upward and away from the secured front curves and the lenses thereon. The removed back curves may be transported to a waste disposal area by a variety of devices, such as a plurality of suction cups.

In a second variation, the separation device comprises an eccentric cam driven prying means mounted transverse to the direction of the advancing pallets. This prying means includes a first set of securing fingers which engage the front curve mold sections and hold them stationary as a second set of pry fingers, translated eccentrically, first pivotally and then substantially upwardly, engage the corresponding back curve mold halves. These prying fingers bias the back curve molds at a predetermined force with respect to the associated front mold halves, thereby effectively removing the back mold halves therefrom, and exposing the lenses.

In a third embodiment, the separation device comprises a dual linkage, lifting device, mounted parallel to the direction of motion of the pallet stream that demolds the mold sections in pairs. This device includes thin retainer elements which slide between the flanges of the front and back curves as a pallet carrying the molds advances. The retainer elements secures the front curve mold sections to the pallet and prevents them from translating upward. As the front curve halves are secured by the retainer elements, a set of separation fingers, shaped for fitted engagement with the flanges of the back curve mold sections translates upward via a dual motion linkage system. The upward translation of the separation fingers lifts the back curves away from the stationary front curves and the pallet, thereby exposing the lenses, one pair of Lenses at a time.

More particularly, the present invention is directed to an apparatus for demolding contact lenses formed between corresponding front and back curve mold halves after formation and curing of said lenses, each of said mold halves having an arcuate central portion and an annular flange portion, said apparatus comprising the features set forth in claim 1 appended hereto.

The separation means may include a first set of elements for engaging the annular flange portion of said front curve mold halves and holding same stationary, and a second set of elements for engaging the annular flange portion of said back curve mold halves for lifting and removing the back curve mold halves from the corresponding front curve mold halves.

Still further, the present invention is directed to a method of demolding at least one set of corresponding first and second contact lens mold halves after the formation of a contact lens therebetween, comprising the steps set forth in claim 22 appended hereto.

Further benefits and advantages of the present invention will become apparent from a consideration of the following detailed description given with reference to the accompanying drawings, which specify and show preferred embodiments and variations of the invention.
Figure 1a is a top plan view of a production line pallet, used to transport a plurality of contact lens molds throughout the contact lens production facility;
Figure 1b is a side elevational view of the production line pallet; and
Figure 1c is a front view of two lens molds situated in respective cavities of the lens mold pallet;
Figure 2a is a front elevation view of a first variation of an infra-red demolding embodiments for imparting a thermal gradient across the back curve mold and the lens formed thereunder; and
Figure 2b is a side elevation view of the first variation of the infra-red demolding embodiment illustrated in Figure 2a;
Figure 3a is a front elevation view of a second variation of the infra-red demolding embodiment for imparting a thermal gradient across the back curve mold and the lens formed thereunder; and
Figure 3b is a side elevation view of the second variation of the infra-red demolding embodiment illustrated in Figure 3a;
Figure 3c is a side cross-section view of the manifold in which the spring biased infra-red nozzles are mounted;
Figure 4a is a side cross-sectional view of an energy transfer reflecting tube of the infra-red demolding device shown in Figures 2a-2b;
Figure 4b is a cross-sectional view of an energy transfer reflecting cavity of the infra-red demolding device shown in Figures 3a-3c;
Figure 9 is a top diagrammatic view of a first embodiment of a separation means for the present invention which uses a dual separating shim device which is the preferred embodiment for the present invention;
Figure 10 is a side view of separating mold section, in accordance with the operation of the first embodiment of the separation means illustrated in Figure 9;
Figures 11a-c illustrate in detail the sequence of steps for separating the back curve mold portions from the front curve mold portions of a plurality of contact lens molds in a first embodiment of the mold separation apparatus; wherein

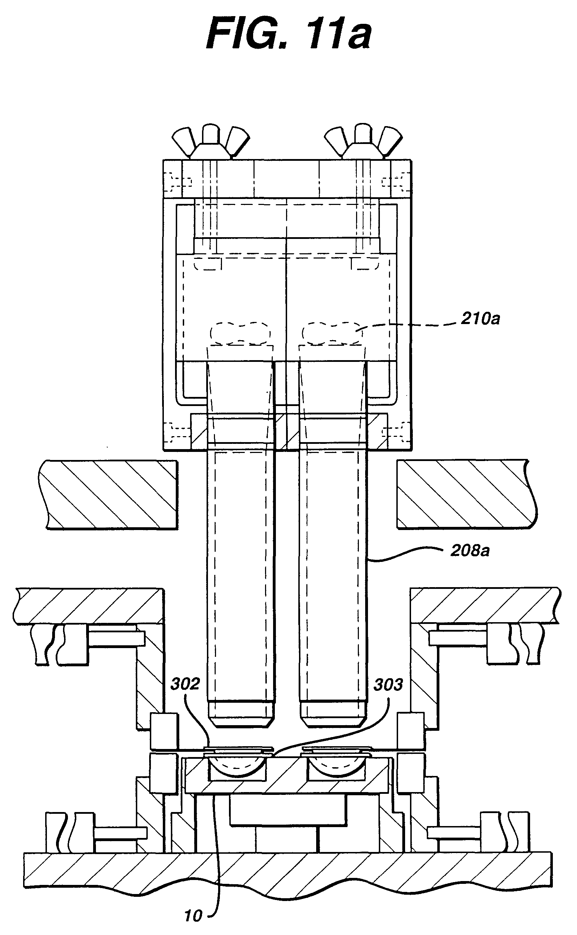

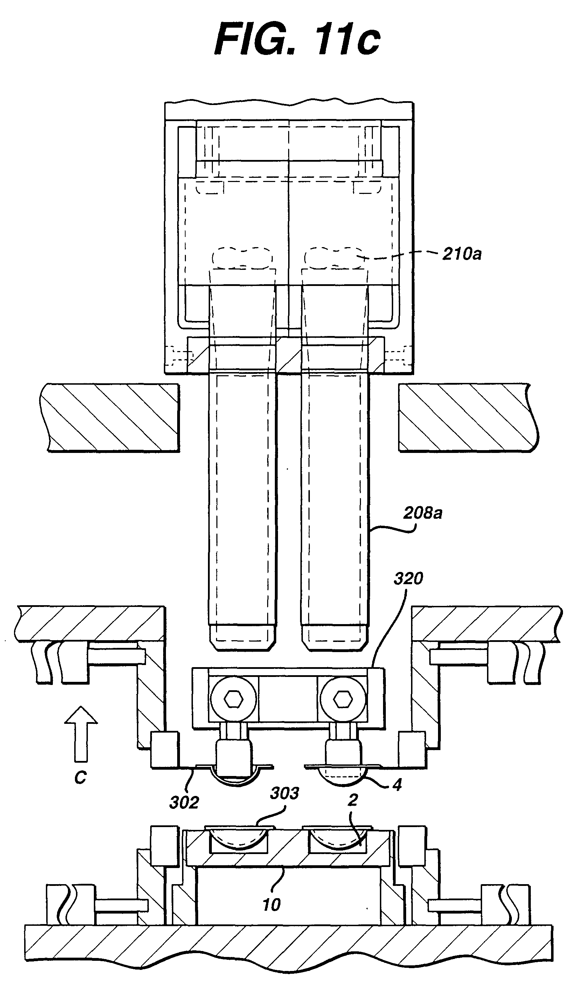

Figure 11a illustrates the device with the infra-red tubes engaging the mold parts and the first and second set of fingers engaging the mold flanges;

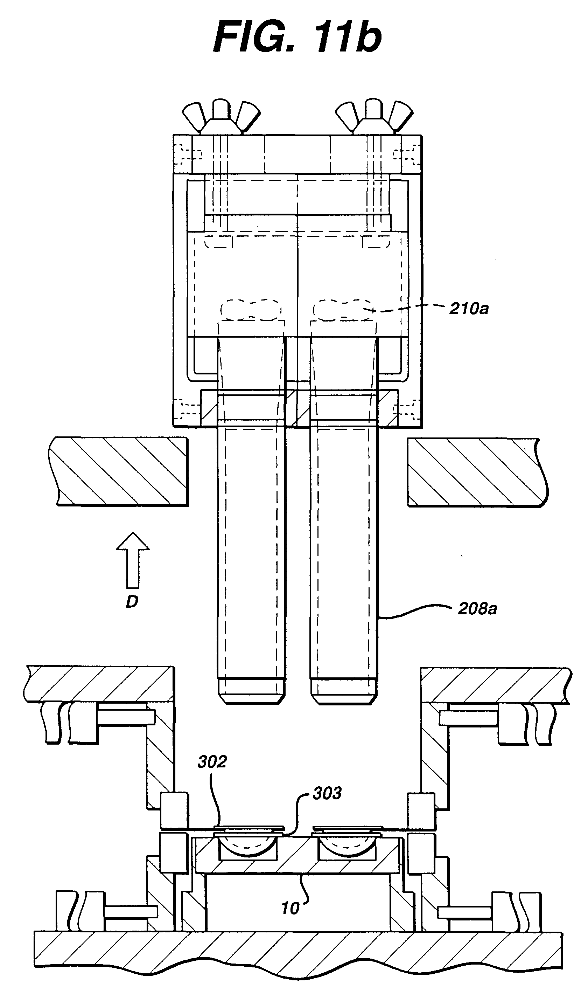

Figure 11b illustrates the retraction of the infra-red tubes and engagement of the suction cup assembly; and
Figure 11c illustrates the upward motion of the second set of lifting fingers of the assembly to remove the back curve mold part from the front curve mold and molded lens.

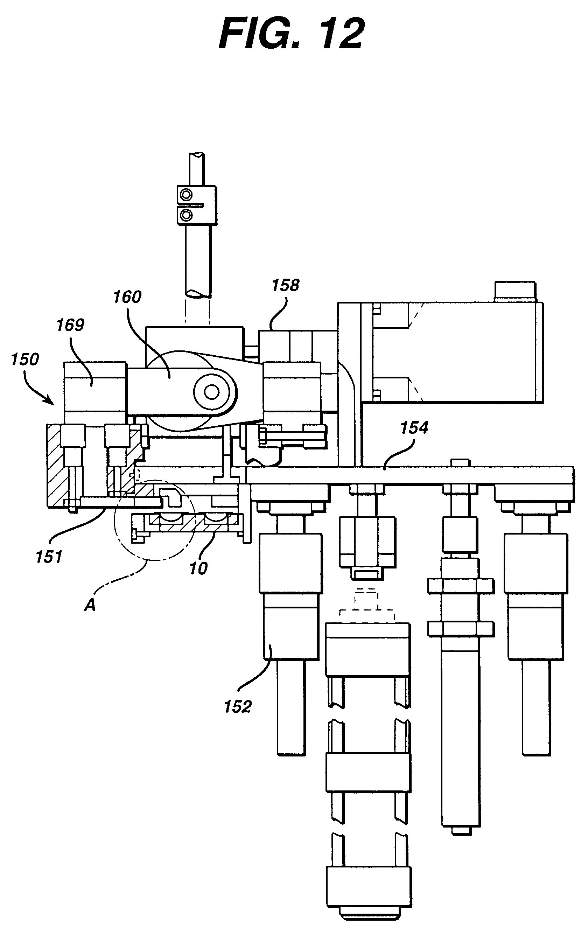

Figure 12 illustrates, in a sectional end elevational view, a second embodiment of the separation means of the demolding apparatus which mechanically pries apart the mold halves;

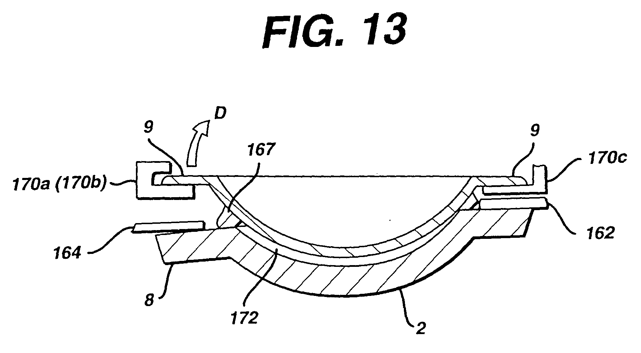

Figure 13 illustrates diagrammatically the mold halves in the process of being separated by the apparatus illustrated in Figure 12;

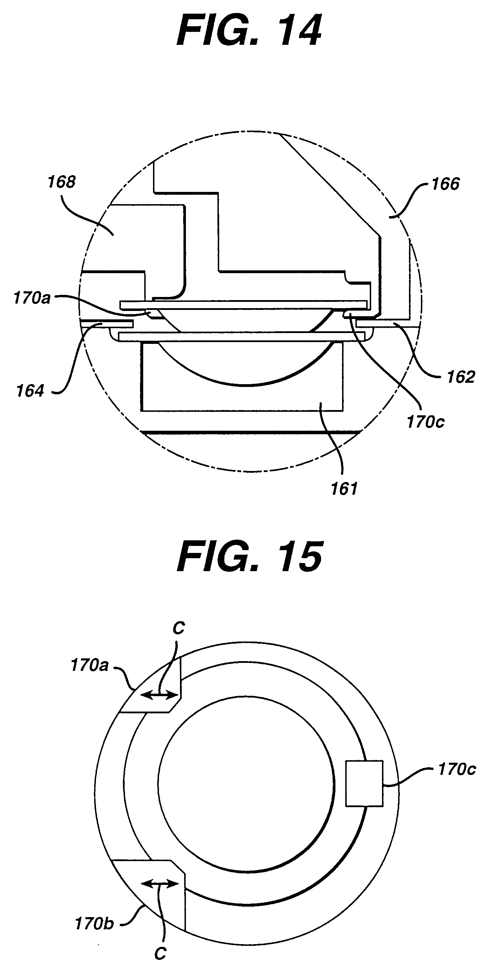

Figure 14 illustrates, on an enlarged scale, a portion of the mold halves separating structure, shown in the encircled portion A of Figure 12;
Figure 15 illustrates a bottom view of the pry fingers of the structure shown in Figure 14;

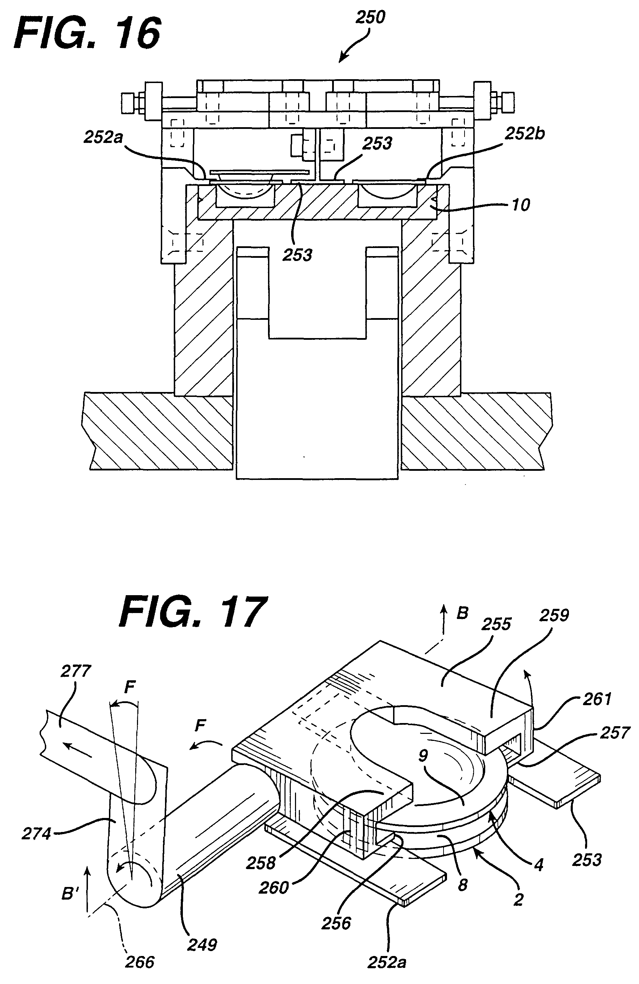

Figure 16 is a front view of a third embodiment of the separation means of the demolding apparatus;
Figure 17 is a diagrammatic and isometric view of a third embodiment of the separation means of the demolding apparatus;

The ophthalmic lens to be demolded in the practice of the present invention is preferably formed in a volume defined between front and back contact lens mold portions, each of which are formed by the processes set forth in U.S. Patent 5,540,410.

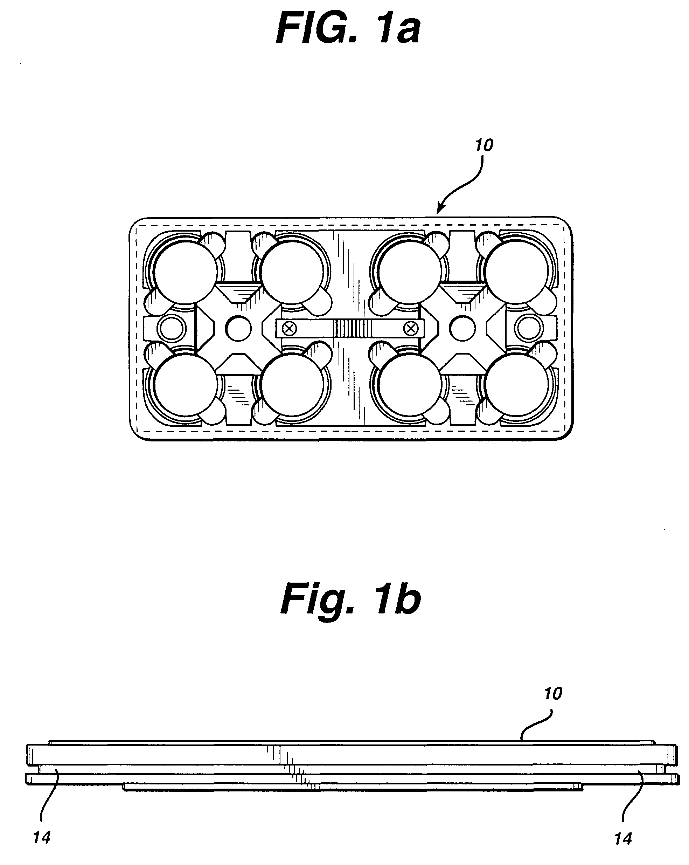

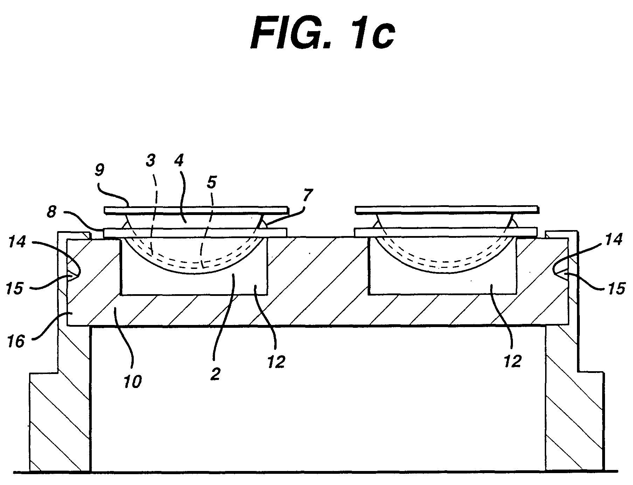

More particularly, the front and back curve mold portions are preferably transported through the manufacturing line on pallets 10 one of which is shown in Figure 1a. Referring also to Figure 1c, it is understood that the front curve portion 2 of the mold is carried within one of the plurality of recesses 12 defined by the pallet 10. In the presently illustrated embodiment of the pallet 10, the pallet 10 has the capacity to carry up to eight front curve molds in its recesses 12. During the process by which the lens is formed, the concave portion 3 of the front curve mold 2 is partially filled with a monomer solution 5 (which becomes the contact lens), and then receives the convex portion of back curve mold 4 therein. The back curve mold 4 is seated within the concave portion 3 of the front mold half 2 under a vacuum to avoid the possibility of trapping an air bubble in the monomer. The mold halves 2,4 are then clamped squeezed together to displace excess monomer 7. The excess monomer 7 collects in a ring around the periphery of the curved portions of the mold halves 2,4. Inasmuch as each mold half 2,4 includes circumferential flange portions 8,9, respectively, the excess monomer collects in a space therebetween.

The assembled mold halves 2,4 may then be clamped again and precured in a low oxygen environment. Following precure, the lenses are fully cured with heat and UV radiation which causes the complete polymerization of the monomer matrix of the contact lens.

The annular flanges 8,9, formed at the circumferential periphery of each lens mold portion 2,4, has the additional purpose of providing a site at which an external apparatus may be employed to facilitate the separation-of the lens molds 2,4 to access the newly formed lens. This separation step, however, is preceded by the application of a thermal pulse to the back curve mold 4. The purpose of this thermal pulse is to establish a thermal gradient between the interface of the back curve 4 and the newly formed lens 5. This gradient causes a differential expansion of the back curve with respect to the lens therein reducing the adhesion of the lens 5 to the back curve 4. Means for establishing the thermal gradient comprise aspects of the present invention, and are described in full detail below.

First, however, referring now to Figure 1b, in which a side view of the pallet 10 is shown, it is necessary to set forth the important features of the mold carrier. In order to insure that the continuous stream of pallets 10, which characterize a fully functional automated fabrication line, travels smoothly and consistently, each pallet includes a groove 14 formed in the side thereof. These grooves 14 are designed to engage transverse ribs 15 which thereby minimize possible vertical motion of the pallet 10 during fabrication steps, such as the demolding and separation stage which is the subject of the present invention.

More particularly, with respect to Figure 1c, which is a front view of a pallet 10 carrying a pair of assembled molds 11 (each comprising a front curve 2 and a back curve 4, having a newly formed contact lens 5 disposed therein), the engagement of the side grooves 14 of the pallet 10 and a set of transverse ribs 15 which extend along the inner surfaces 16 of a conveyor line is demonstrated. A suitable registration means (not shown) may also be included for locating the pallets along the conveyor path, therein holding the pallet absolutely fixed for fabrication stages, such as the demolding station.

### MEANS FOR APPLYING THE THERMAL GRADIENT

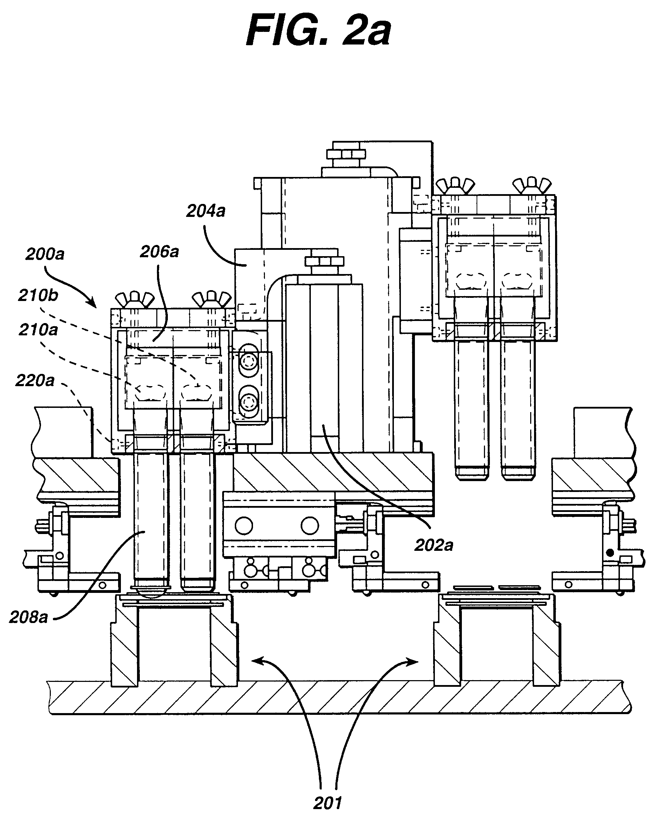

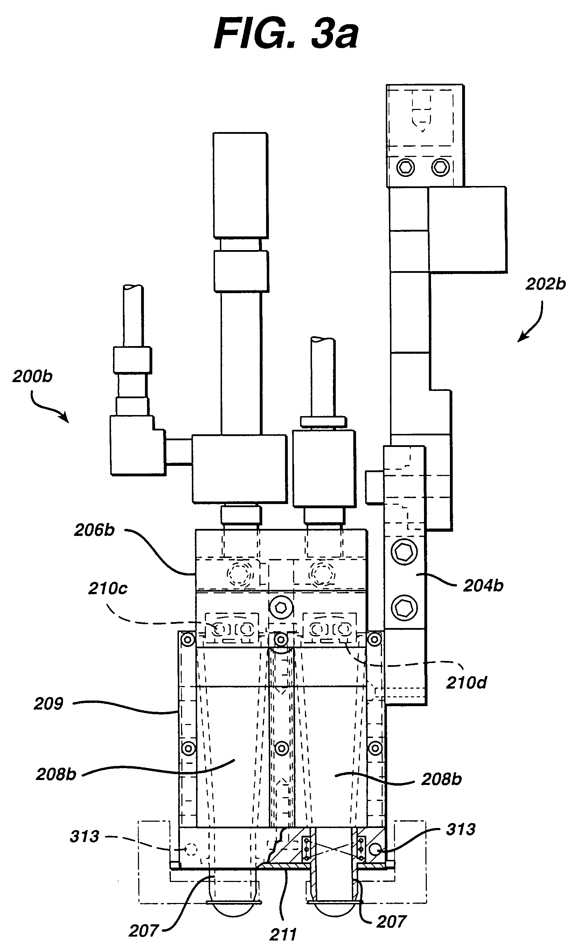

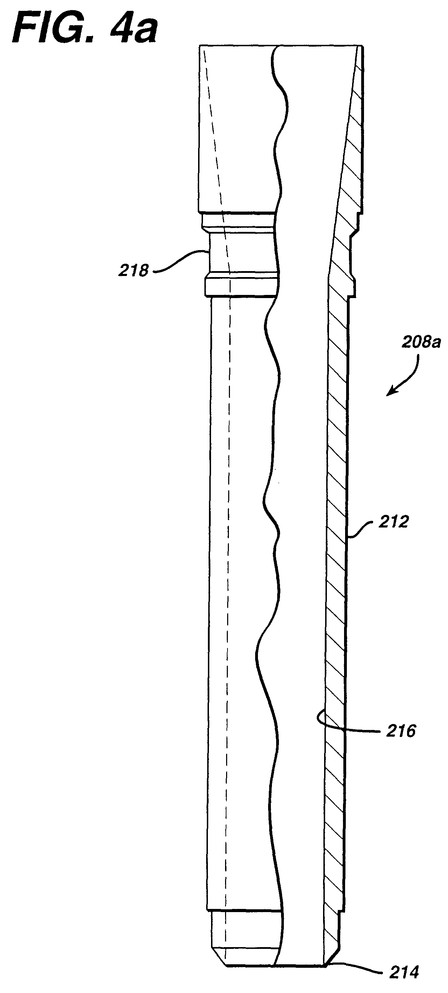

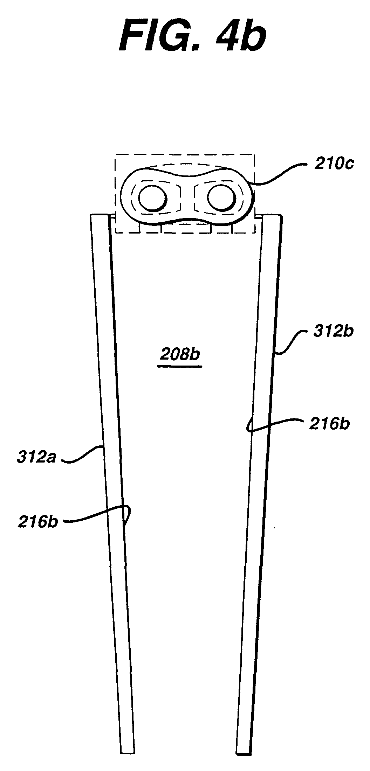

Referring now to Figures 2a-2b through 4a-4b, each of which illustrate different views and variations of an infra-red heating apparatus for generating a thermal gradient across the back curve mold section and the lens formed therebelow. More particularly, Figures 2a-2b and 4a show a first variation of the infra-red heat assembly, and Figures 3a-3c and 4b show a second variation.

Inasmuch as the attending reciprocation and housing components of each variation are similar, reference is now made to Figures 2a and 3a, each of which illustrates the respective embodiments of the infra-red heater assembly comprising a pair of vertically reciprocating heating devices. Each of the heating devices 200a, 200b corresponds to one of a parallel set of conveyor tracks 201, along which pallets 10 are transported.

The support arm 204a of the first variation is further coupled to an infra-red heater housing 206a which includes a pair of horizontally disposed infra-red heating elements 210a. In the first variation, an array of infra-red reflector tubes, one of which is referenced 208a descends externally downward from the housing 206b in an array which conforms to the disposition of the curve pairs on the pallets.

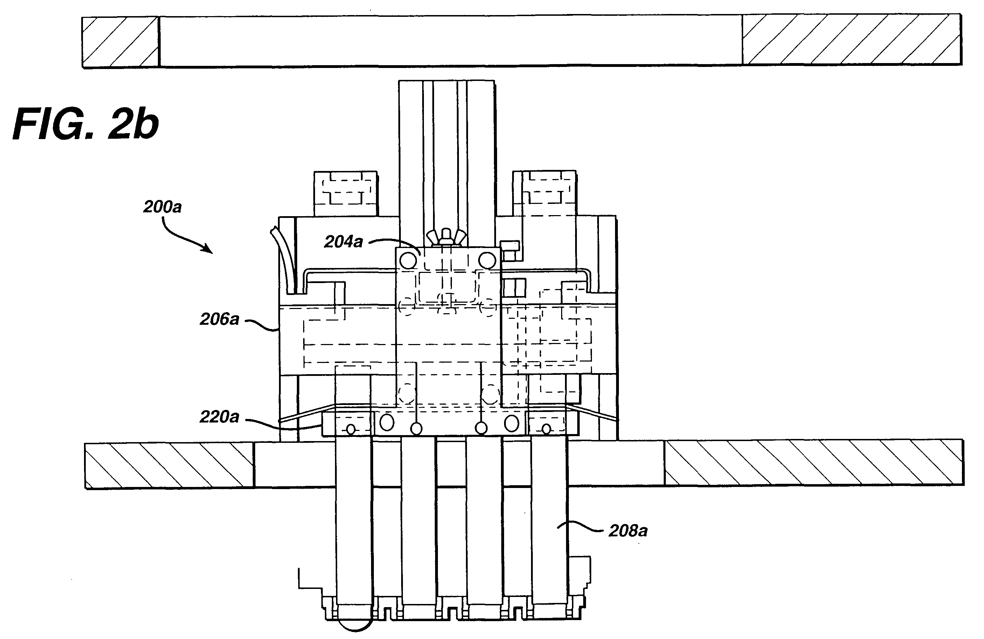

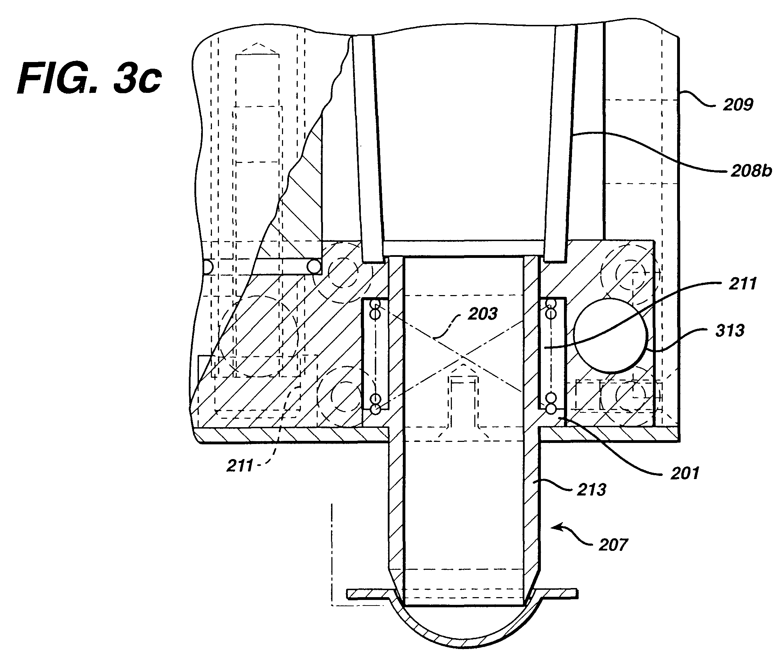

In the second variation, illustrated in Figures 3a,3c, a similar pair of demolding devices, now denominated 200(b) also correspond to a pair of conveyor tracks 201(b) in a manner similar to that described for Figures 2(a) and 2(b). Each infra-red heating device 200b comprises a reciprocating base 202b which is coupled to a support arm 204b The reciprocating base 202b rises and descends in accordance with the actuation of a drive mechanism (not shown). This drive mechanism may comprise a ball screw, a pneumatic lift, an air cylinder, or other suitable, efficient and accurate lifting means. Suitable control means may be employed as well to ensure proper cooperation between the conveyer track and reciprocating assembly.

In this second variation an infra-red reflector cavity is provided within the housing 209. The housing 206b includes a somewhat different configuration for the reflector cavity and larger volume. The second variation of the infra-red heating assembly 200b, as shown in Figure 3a, further includes a plurality of nozzle elements 207 which are spring biased to the bottom of the housing 206b, in a manifold 220b (see Figure 3c). This spring biasing permits the lowering mechanism, which causes the assembly 200b to descend into close proximity with the back curves, to place the nozzles 207 in contact with the molds without concern that misregistration or variation in pallet manufacturing, may have rendered the pallet, and the molds, mispositioned enough as to cause damage to the apparatus the tubes or the lenses. Inasmuch as the nozzles 207 are heated during operation by the infra-red energy channeled therethrough, the ability to position the nozzles 207 to contact the back curves without concern for damage to either the assembly or the molds also enhances the heat transfer to the back curves.

In order to ensure that the nozzles 207 are not heated to a temperature above the melt point of the thermoplastic molds, or appropriately 100°C, at which the polystyrene mold sections will melt upon contact therewith, the assembly 200b further comprises a cooling plenum 313 in the base member 211 of housing 209 which cools the nozzles 207 through conduction from cold air, provided by an external source, for example a vortex tube, through ducts 313 in manifold 211, as illustrated in Figure 3(c). The subsequently heated air is blown out of the assembly 200b, via an exhaust duct.

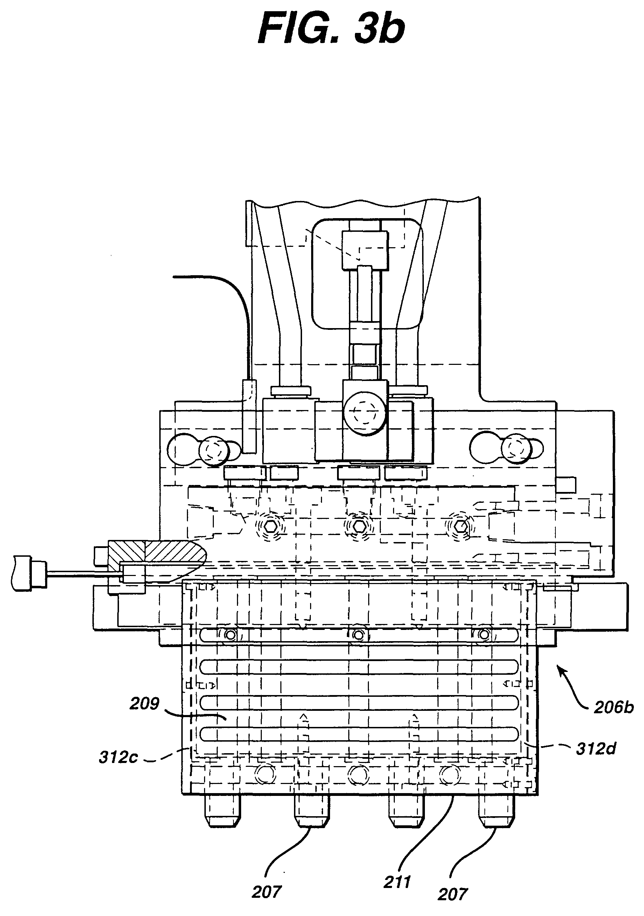

Referring now also to Figures 2b and 3b and both variations of the embodiments which each show a side view of the corresponding infra-red heating device 200a,200b, it is understood that each of the heating devices preferably comprises a 2x4 array of reflector tubes 208a or nozzles 207, corresponding to the 2x4 array of molds on pallet 10.

Once a pallet 10 has been registered into proper position beneath the demolding station, the assembly, and more particularly, the infra-red reflector tubes 208a, and nozzles 207 (as described more fully hereinbelow with respect to Figures 4a and 3c), descend into proximal disposition above the back curve portions of the respective mold structures, thereon directing a sufficient amount of heat to cause a thermal gradient to occur so that the back curve and the contact lens there below are loosened with respect to one another.

The infra-red energy source of both variations may comprise a variety of different emitter elements, including metallic and ceramic elements, an infra-red lamp element is the preferred choice. It is understood that infra-red lamp elements may be formed in various conformations, including incandescent, but the preferred example is a cylindrical tubular housing including therein an excitable gas medium which emits energy in the infra-red bandwidth upon the application of a voltage there across. By way of example, desirable infra-red source elements, which would be suitable for the purposes of the present invention are mediumwave twintube 18x8 emitters, such as marketed by Heraeus Amersil, Inc. 3473 Satellite Blvd., Duluth, Ga. Mediumwave twin tubes may be provided in a variety of power ratings and sizes; for example, a 210 Watt emitter having a heated length of 134 millimeters (158 millimeters total length), and 12 millimeter ends, or a 260 Watt emitter having a 164 millimeter heated length (188 millimeters total length) with 12 millimeter ends. A preferred modified version of one emitter produces 325 Watts at 115 Volts. The desired wavelength of the source is between 2 and 4µm, the preferred wavelength being 3µm inasmuch as the polystyrene of the mold sections is highly absorbing of 3µm infra-red.

In a 2 x 4 array, two emitter sources 210a, 210b (Figure 2a) and 210c, 210d, (Figure 3a) are provided and each of the emitter sources is designed to provide infra-red heating to four reflector tubes 208, or nozzles 207 which carry the infra-red energy to the mold curves.

Referring now to Figures 4a a cross section view of the reflector tube element 208a, is shown. With respect to the reflector tube 208a of the first assembly 200a, the reflector tube comprises an elongate cylindrical copper tube 212, having a beveled lower end 214. The angle of the beveled lower end 214 is set to correspond to the angle of the concavity of the surface of the back curve mold half so that upon descending toward the pallet 10, the tubes 208a may direct the weakly collimated infra red energy nearly completely onto the mold. This proximal disposition prevents the infra-red energy intended to be directed at the back curve mold half from being distributed into the surrounding environment, thereby heating the pallet surfaces which may adversely effect the desired thermal gradient.

The interior surface of the reflector tube 208a comprises a thin reflecting layer 216a of gold. Inasmuch as the fabrication of the mold sections and the lenses as well as the subsequent demolding of thereof may include chemical agents which are caustic, and may corrode metal surfaces to the degree that they may not reflect infra-red energy, gold which resists such effects, is technically desirable choice.

As will be set forth hereinbelow, however, with respect to the reflector cavity 208b of the second variation 200b, the inner surface of the tube may also comprise a layer 216b of polished aluminum. The cost savings associated with using aluminum as opposed to gold make the alternative choice of metal a reasonable choice as well.

The upper portion of the reflector tube 208a comprises a recessed annular circumferential region 218. This recessed region 218 is ideally suited for securely mounting the tube 208a into housing 206a beneath the infra-red elements 210. More particularly, referring again to Figures 2a and 2b, the tubes 208a extend downwardly from the infra-red emitter elements 210, through the bottom of the housing 206a, and are mounted via ceramic elements 220a.

As illustrated in Figure 3a and 3b, a housing 209 is suspended from the infra-red heater housing 206(b) and includes two reflector cavities 208b, each of which reflect infra-red energy for four nozzles 207 and four assembled mold halves. Housing 209 is closed along the bottom by a manifold 211, which is bored to receive 8 nozzles 207 in an 2 x 4 array, and a plurality of cooling ducts 313 which are used to cool the nozzle to a temperature just below 100°C. Each of the reflector cavities 208b is formed of a pair of angled reflecting baffles 312a, 312b, and are closed on the ends by vertical trapezoidal baffles 312(c), 312(d).

Figure 4b illustrates the alternative reflector cavity 208b design, used in the second variation of the infra-red demolding station 200b. A rectangular infra-red reflecting cavity is provided, and in order to focus the maximum amount of energy from the corresponding emitter, the baffles 312a, 312b of the cavity 208b are angled inward toward the bottom, thereby reducing the spot size of the light exit (into the nozzles 207), and increasing the collection of energy from the emitter by virtue of a wider top. The reflector cavity is fully contained within the housing 209.

Figure 3c, illustrates in enlarged detail, a spring biased nozzle 207 which is representative of the second variation of the infra-red heating assembly 200b. The nozzle 207 comprises a hollow cylindrical body 213, seated in a through bore in manifold 211. The nozzle extends from a contact point with its corresponding infra-red cavity 208b to an external disposition above the curve pairs. The nozzle 207 further includes an annular flange portion 201 thereof which extends outward from the external surface, perpendicular to the reciprocating axis of the body 213, and is resiliently coupled to manifold 211 by at least one biasing spring 203. The flange 201 reciprocates according to the force applied to the nozzle 207 within the annular cooling plenum 211 which is supplied with cooled air via duct 313. The diameter of the nozzle 207 is slightly less than the width of the bottom opening of the infra-red cavity, such that the nozzle may reciprocate into the cavity upon the application of an upwards force thereon, such as by the seating of the nozzle against the curve pair. As is shown from the front side and lateral side views (Figures 3a and 3b), respectively, the manifold 211 includes an array of through bores for mounting a plurality of nozzles 207.

Two particular advantages of the second embodiment are derived from the resilient nozzle construction. First, the spring biased nozzles 207 engage the pairs of mold halves, prior to separation and secure them to the pallet 10 while the means for separating the halves engages the array. This avoids problems that result when a mold half is knocked out of its cavity by one of the mold separation devices.

Secondly, the diameter of the nozzle is selected to focus the infra-red energy on the portion of the back curve mold half immediately adjacent the contact lens, and shields that portion of the mold to which the HEMA ring is secured. This results in preferential separation from the lens, and preferential adhesion of the HEMA ring, and consequent removal of the HEMA ring with the separated mold part.

Each of the separation means function by mechanically prying the back curve mold half from the front curve half of each contact lens mold assembly. The prying process occurs under carefully controlled conditions, with some what different force vectors as explained in detail below, so that the back curve half will be separated from the front curve half without destroying the integrity of the lens formed in the lens mold.

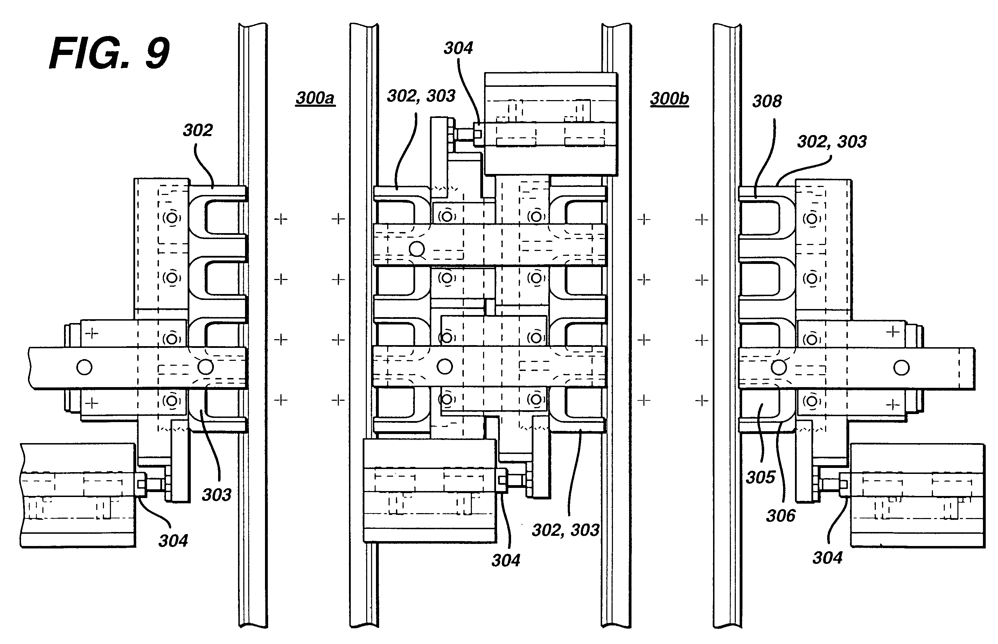

The preferred separation device, which is described hereinbelow with reference to Figures 9-11c, includes two pair of separating shims on either side of each for each conveyor line. Each of the pairs of shims are introduced between the flanges of corresponding front and back curves. When separated, one of each of the pairs of shims hold the front curves down on the pallet, and the second of each pairs of shims is raised, lifting the back curve off the pallet, separating it from the lens beneath. This operation is described in detail in conjunction with the infra-red thermal gradient application means as set forth previously.

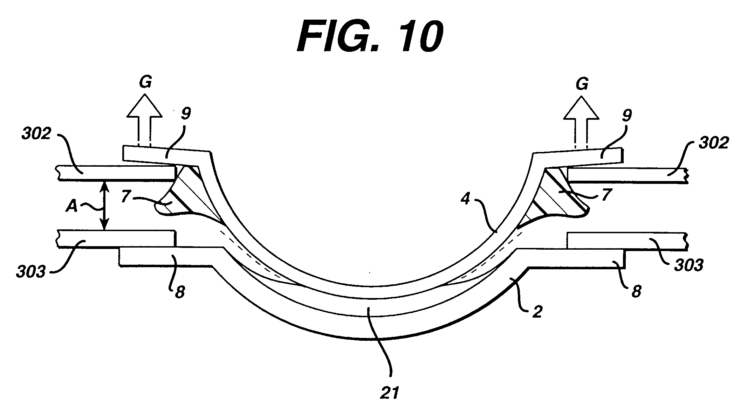

Referring now to Figures 9 and 10, a pair of manufacturing lines 300a,300b are shown, along which the pallets are advanced to be exposed to the infra-red heating and to be separated. Once the pallets have been properly advanced, and secured in proper position, the infra-red tubes are lowered into contact with the back curves, and opposing pairs of shims are introduced between flanges 8,9 of the mold pairs. The shims are presented between the flanges of each mold pair after the pallet's forward advancement has stopped, by virtue of the lateral reciprocation of the shims 302,303 by a reciprocating drive 304.

Figures 11a-11c show the operational sequence of the preferred separation devices, as introduced above. The demold assembly includes vertically reciprocating housing containing the infra-red heating elements 210 and the reflector tubes 208 descending downwardly therefrom, one of which is enumerated as 208a. In correspondence with the embodiment of Figure 9, it is understood that in practice a separate demold apparatus having a duplicate of the assembly illustrated in Figure 11a-11c would be provided for the second conveyor line 300b.

To apply heat, the reciprocating housing is lowered in the direction of arrow "A" in Figure 11a so that the beveled ends of the reflector tubes engage their respective mold assemblies for applying infra-red heating at controlled energy levels and duration. Although Figure 11a shows only two tubes engaging back curves, it is understood that this view is provided from the front of a matrix of such tubes.

As shown in Figure 11a, during the time the infra-red reflector tubes descend and expose the back curves to heating, the set of shims are extended by the reciprocating drive motors 304 for insertion between the gaps formed between the respective flanges 8,9 of the front and back curves for each of the four lens molds situated on either side of the pallet 10. Upon the application of the thermal gradient, the shims may provide a preload bias between the corresponding curve molds.

The pairs of shims 302,303, shown in diagrammatic elevation view in Figure 10, each include upper and lower fingers which separate vertically, one from the other. Upper pry tool 302 includes a plurality of arcuate recessed regions 305 defined between fingers 306 which form four bights or lens receiving areas. The lower shim 303 includes similar fingers 308 which form corresponding bights or lens receiving areas.

As shown in the detailed side views of Figures 11a-11c, the top group of shims 302 is situated directly above the bottom group of shims 303 and may be simultaneously inserted into the gap defined between the circumferential flange portions 8,9 of the front and back curve molds. The top and bottom fingers 306,308 of the shims are separable, reciprocally, in a vertical direction with respect to one another to perform a prying operation, as will be explained in detail below.

It is understood that each set of shims are inserted in a manner such that fingers 306 of the shims anchor the annular flange portion 9 of the front curve of the lens mold to the surface of the pallet 10, and that the fingers 308 of the top shims, by action of a vertical drive means lift and vertically separate the back curve mold portions from the front curve mold portions without destroying the integrity of the contact lens or either of the mold parts.

As illustrated in Figure 11b, after exposing the back curve to a specific amount of infra-red heating, the housing 206 is raised by vertical drive 202 as illustrated in Figure 2a. The back curves are then raised upwardly by the shims at a rate set in accordance with the predetermined constant force profile.

It has been found that by properly controlling the lift rate of the top shim 302, so as to mimic a constant force (in contrast to a constant linear motion) lift, a higher effective yield may be achieved. The specific profile of the pseudo-constant force lift may be determined empirically off-line and then applied uniformly to all mold pairs with considerable effectiveness.

In the preferred embodiment a 2mm space exists between the mold flanges, and the combined thickness of the upper and lower separation shims is approximately 1.5 mm. After insertion, the shims are separated at a velocity of 10mm/sec for a distance of 1 mm, thus providing a small preload to the mold halves. The separation velocity is 0.6mm/sec for a separation distance of approximately 1.3 mm, and then a high velocity lift off at the maximum velocity of the device motor.

In an alternate embodiment, each pair of laterally disposed shims separates slightly after insertion in order to preload the front and back curves, thereby providing a small bias apart prior to the application of a thermal gradient.

After the preload is established, the infra-red lamps are energized and the back curve heated under preload. This provides essentially a mold release from thermal energy, assisted by mechanical energy as opposed to a release from mechanical energy, assisted by thermal energy as is the case with the preferred embodiment. In this embodiment the mechanical preload is 40 to 60% of the force applied during mechanical separation, and the thermal application is extended until release. while not having the same cycle rate as the mechanical release, this embodiment provides a smoother and more gentle release, and fewer instances of lens damage from separation.

During the mold separation step illustrated in Figure 11c, vacuum suction for the suction cup assembly 320 is activated, and the top shims 302 begin to lift. This lifting action causes the convex portion of the back curve portion to bow inwardly, as shown in Figure 10, initiating a bilateral separation of the back curve lens. This, in turn, initiates a standing wave in the material which travels downwardly along the convex surface of the back curve mold half 4. If the upward movement of the back curve mold half, indicated by arrows G, does not exceed the downward propagation rate of the standing wave in the material, then the back curve 4 will be lifted clean without tearing the lens.

As the back curve is lifted free, it carries with it the HEMA ring 7 which may be preferentially retained on the back curve by means of a surfactant treatment of the front curve flange 8, or a corona treatment of the back curve flange 9. Thus, the back curve lens molds 4 are effectively removed from their respective front curve lens mold portions 2. The back curve molds may subsequently be removed to a waste disposal station by means of a suction cup array 320 which retrieves the curves from the top shim 302 and transports them accordingly.

As illustrated in Figure 12, a second embodiment of the separation apparatus is illustrated above a pallet 10 of mold pairs which is advanced to a position in alignment with the heating applicator. Energy is applied to the mold section, thereby weakening the adhesion forces between the back curve mold section and the lens therebeneath. The pallet 10 is subsequently engaged by the prying assembly 150 illustrated in Figure 12.

Referring now to Figures 12-15, the second embodiment of the prying assembly 150 is provided in several illustrative views, whereby features and functions specific thereto may be shown. The prying mechanism 150, including gripping, holding and prying elements 151, described more fully hereinbelow with respect to the enlarged view of region A of Figure 12 (Figure 14), which is positioned to the side of the advancing pallets 10. The prying assembly 150 is mounted for vertical reciprocation and is driven by a first vertical reciprocation drive cycling means 152, which is mounted beneath the conveyor level, and couples to the prying assembly through a stationary mounting 154. The prying assembly 150 is provided with arcuate translational motion by means of a rotary motor 158.

For the purposes of imparting a rotational prying force to the back curve mold sections, an eccentric rotating mechanism 160 is coupled to the prying arm 151. Referring now to Figures 13 and 14 in particular, the prying mechanism is described in detail. The demolding module or apparatus 170 a-c includes an inverted T-bar structure 162 and horizontally extending lower fingers 164 which are stationarily positioned above the upwardly facing flange surface 8 of each respective front mold curve half in order to prevent the front mold curve half from being lifted out of the pallet 10 in which it is located during the prying apart and separation process. These fingers 164 may also, if desired, extend along the opposing sides of the flange 9 extending from the front curve mold half so as to secure the latter against rotation in the recess 161 of pallet 10 during the mechanical prying apart of mold curve halves.

Concurrently, with the foregoing, an upper prying structure 166 including pry bars 166, 168 is adapted to have pry fingers 170a and 170b adapted to be moved into selective engagement beneath the flange portion of the back mold curve half, In this particular instance, the pry bars 166, 168 include three pry fingers 170a, 170b and 170c of which at least the first two are mounted on my pry bar 168 and movable towards and away from finger 170c, mounted on pry bar 166, in the direction of arrows C, by operation of a prematic drine cylinder 169. Inasmuch as the two of the prying fingers 170a and 170b are integrally mounted with one another, they are located spaced close to each other so as to engage beneath one side of the flange portion, whereas pry finger 170c is located so as to form a support proximate the opposite side of the flange portion of a back curve mold half. The operation of the mold separation apparatus 150 provides for the pry fingers 170a, 170b and 170c to be movable radially outwardly and inwardly so as to be positionable in place beneath the flange portion of the back mold curve half in position in recess 161 on the pallet 10.

Movement is imparted to the pry fingers 170a, 170b and 170c of the pry bar arrangement through operative structure comprising rotatable eccentric cams 160 actuated from a drive motor 158 through a suitable drive transmission. This movement is a multiaxis rotational or tilting displacement imparted to pry fingers 170a, 170b and 170c and titling in the direction of arrow D which, in conjunction with a lifting action imposed through a hydraulic piston unit 152, will cause the back mold half to be lifted away from the front mold half at an angular tilt. The pry finger 170c serve to lift the opposite side of the mold to prevent the opposite end edge of the mold part from sliding during mold separation, so as to inhibit the lens contained in the cavity 172 of mold part from being squashed and resultingly damaged.

In order to control the separating action between the front and back mold curves halves and to prevent any breakage of the back curve mold half, the rotatable eccentric cams 160 provide for an intermittent and controlled rotational and angular displacement of pry fingers 170a, 170b and 170c to produce a desired separating wavefront propagating at a constant velocity across the back mold half. In essence, the initial movement of the pry fingers may be to take up slack or tolerance gaps with regard to the flange surface on the back mold half which is contacted by the pry fingers, and may entail a fast movement of the cams. Thereafter, a stop or slow movement in combination with a lifting action may produce a slow wavefront propagation; followed by a fast movement to clear the back curve from the assembly for disposal. The excess material ring also breaks away from the flange of the front mold half and preferably adheres to the back curve for disposal. The foregoing sequence may be readily varied to conform with the requirements of different types of mold assemblies or kinds of materials employed.

During the separating of the mold halves, a vertical lifting action is exerted against the prying fingers 170a, 170b and 170c that are engaging beneath the flange of the back curve mold half, and the selective rotational movement imparted to the pry fingers of the apparatus so as to implement the lifting effect at a controlled rate extending across the periphery of the flange. The rotational pivoting of the pry fingers 170a, 170b and 170c about an axis extending perpendicular to the plane of the flange of the back curve mold half may be essentially continuous or incremental stop-and-go at varying speeds and of only a few degrees, adequate to impart an angular upward lift to the flange so as to provide a tilting and increasingly progressive "wavefront" separating the mold halves. In effect, this will provide a gradual and controlled separation between the mold halves as shown in Figure 13, from one end towards the opposite end so as to enhance the ease of separation between the two mold half portions while lessening the possibility of the contact lens which is located in the cavity of the front mold curve half, from being damaged. This lifting action of the back curve mold half also causes the excess material ring, the HEMA ring 167, which was formed during the polymerization of the contact lens, to be raised via adherence to the back curve mold half. Upon completion of the mold separation sequence, the front mold halves with the contact lenses disposed therein are then advanced beyond the demolding apparatus. The back mold halves (with excess material rings possibly still adhered thereto) are then released from engagement with the pry fingers 170a-170c by reverse operation of the pneumatic cylinder 169, so as to drop into disposal bins which have been moved into place therebeneath. The thus separated back curve mold halves which are dropped into the bins (not shown) are conveyed to a disposal location.

The third of the three embodiments for separating the back curve and the front curve molds, comprises a dual linkage gripping and lifting means, and is hereinbelow described with respect to an assembly to lift or separate two adjacent mold sections at a time as the thermal gradient is provided to loosen the mold sections. As mentioned above, it was found that the preferred method for removing the back mold portion from the front mold portion after heating the back mold portion, was to apply a relative tensile force between the mold portions. To apply this tensile force, the front curve mold half is held in place as illustrated in Figures 16 and 17 wherein a set of thin metal shims 252 and an inverted T bar 253 are fixably mounted above the pallet illustrated in Figure 16 to secure the front curve mold half 2 during the pry operation. Finger 253 is an inverted T shaped member and secures adjacent front curve mold halves 2 on pallet 10 with opposing sides of the inverted T. Each of the sides of the inverted T member 253 cooperates with shims 252a, 252b to secure the corresponding front curve mold halves 2 in position. As pallet 10 is advanced through the separation station the shims 252, 253 sequentially engage each pair of mold sections, as shown in Figures 16 and 17, and secure the front curve mold halves to the pallet.

The back curve mold half flanges 9 of laterally adjacent pairs of molds are subsequently engaged by a pry fixture 255 (diagrammatically illustrated in Figure 17), comprising a set of horizontally oriented U-shaped slots 260,261, each having upper and lower ledges 256,257 and 258,259, respectively, which are mounted to a which both rotated and elevated shaft 249. The shaft 249 is, itself, coupled to a vertical device mechanism which lifts shaft 249 direction of arrow B' on a vertical link 274 which is attached to and a horizontal drive arm 277 which is similarly coupled to the vertical portion 274 to effect rotational mount of the shaft 249.

As the pallet advances before the fixture 255, the lower ledges 256,257, engage the flange 9 from below, and the upper ledges 258,259 engage the flange from above as the pallet 10 is advanced into position by the conveyor. The pallet 10 is stopped incrementally as the pry fixture 255 is rotated about axis 266 in the direction of arrow "F" to apply a tensile force to the back curve mold half 4. The upper part of the pry fixture 255 is capable of rotation about axis 266 so that lower ledges 256,257 pry the back curve mold portion up. It has been found that when the metal ledges 256,257 were allowed to stop under the flange 9, and then tilted back approximately 18°, the overall quality of the lens removed, and the resultant yield was maximized.

As the pry mechanism 255 and shaft 256 are rotated, the entire assembly is lifted upwardly by means of a ramp (not shown) in the direction of arrow B' B which is advanced by a pneumatic or electric drive motor to raise the shaft 249 approximately 10 mm so that the attached pry apparatus 255 may be retracted for disposal of the back curve mold halves after they have been separated from the mold assembly.

It was determined that such above-described mechanical assistance was best supplied just after heating, although no adverse effects would be contemplated if there was less time between the application of a thermal gradient to break adhesion and mechanical removal. In practicable manufacturing terms, the time between thermal exposure and mold separation is between about 0.2 and about 1.5 seconds.

The present invention, which comprises an apparatus and method of manufacturing contact lenses including the loosening and separating of mold pairs used in the fabrication of the lenses, after the lenses have been formed therebetween, has been set forth hereinabove with reference to various embodiments. More specifically, the embodiments set forth above disclose an apparatus for loosening the back curve mold sections from the lenses formed therebetween and three apparatuses for separating the front and back curve molds after the loosening step has been completed. Inasmuch as these embodiments of the present invention have been shown and described, it is to be understood that other variations may be constructed thereunto within the scope of the invention as defined in the appended claims.

## Claims

1. An apparatus for demoulding a contact lens (5) formed between corresponding front and back curve mould halves (2, 4) after formation and curing of said lens, each said mould half having an arcuate central portion (3) and a annular flange portion (8, 9), said apparatus comprising:
(a) means (200a, 200b) for applying a predetermined amount of thermal infra-red energy to said back mould half to create a thermal gradient between said back mould half and the lens therebeneath; and
(b) means (302, 303, 304; 150; 249, 252, 253, 255) for separating said corresponding back and front mould halves;
**characterised in that**:-
said means for applying said thermal infra-red emitter energy comprises:
at least one thermal infra-red emitter source (210a; 210b); and
at least one reflector means (208a; 208b) disposed in energy channelling relation between said at least one thermal infra-red emitter source and said back mould half.

2. The apparatus of claim 1, wherein the thermal infra-red energy is provided at between 2 and 4 micrometres.

3. The apparatus of claim 1 or 2, wherein said at least one reflector means has a cylindrical shape.

4. The apparatus of claim 1 or 2, wherein said at least one reflector means includes a tapered reflector cavity.

5. The apparatus of claim 4, further comprising a nozzle (207) disposed between said reflector cavity and said back mould half.

6. The apparatus of claim 5, wherein said nozzle is spring biased to provide for resilient contact with said back mould half.

7. The apparatus of claim 5 or claim 6, further comprising an air cooling system (211, 313) provided to maintain the temperature of said nozzle below the melting point of the back mould half.

8. The apparatus of any one of claims 5 to 7, wherein said nozzle has a diameter which effectively directs heat to the back mould half adjacent a contact lens formed therebelow, and shields the remainder of the mould from heat, including any portion of said back mould half having a HEMA ring adhered thereto.

9. The apparatus of any one of claims 1 to 8, wherein an inner surface of said at least one reflector means comprises a reflective metal layer, preferably of gold or aluminium.

10. The apparatus of any one of claims 1 to 9, wherein said means for separating includes a first set of elements (303; 162, 164; 252, 253) for engaging the annular flange portion (8) of said front curve mould half (2) and holding same stationary, and a second set of elements (302; 170a, b, c; 255) for engaging the annular flange portion (9) of said back mould half (4) for lifting and removing the back mould half from the corresponding front mould half.

11. The apparatus of claim 10, wherein said second set (255) of elements is adapted to simultaneously lift and rotationally bias the back mould half relative to the corresponding front mould half.

12. The apparatus of claim 10 or claim 11, wherein said means for separating comprises separating shims and/or gripping and lifting means and/or prying means.

13. The apparatus of any one of claims 10 to 12, wherein:
said first set of elements comprises an inverted T-bar (162; 253) and a first set of plurality of prying fingers (164; 252) for engaging the annular flange portion of said front mould half and holding same stationary; and
said second set of elements comprises a second set of prying fingers (170a, b, c; 255) which impart bias to said corresponding back mould half.

14. The apparatus of claim 13, wherein said T-bar and said first set of prying fingers hold the front mould half stationary.

15. The apparatus of any one of claims 13 to 15, wherein lower shims are laterally disposed for engaging and holding stationary said front mould half.

16. The apparatus of claim 15, wherein upper shims engage and lift said annular flange portion of said back mould half.

17. The apparatus of claim 15 or claim 16, wherein said shims each include a curved engaging edge having a bight therein which forms a U-shaped pry tool.

18. The apparatus of any one of claims 15 to 17, wherein each of said sets of separating upper and lower shims comprises a thin flat blade member having a plurality of outwardly extending pry fingers.

19. The apparatus of any one of claims 15 to 18, wherein said sets of separating upper and lower shims are sandwiched together for insertion between said annular flange portions and are separable for separating said corresponding front and back mould halves.

20. The apparatus of any one of claims 12 to 19, wherein at least one gripping and lifting device engages said annular flange portion of said back mould half and lifts said back mould half.

21. The apparatus of any one of claims 1 to 20, wherein there are a plurality of corresponding front and back mould halves which are set forth in a regular array on a pallet and the means for applying a thermal gradient and the means for separating act on each of the pairs of corresponding front and back mould halves.

22. A method of demoulding at least one set of corresponding first and second contact lens mould halves (2, 4) after the formation of a contact lens (5) therebetween, comprising.
imparting a differential expansion between said first mould half and said contact lens by applying a predetermined amount of thermal infra-red energy to said first mould half, thereby breaking mutual adhesion: and
separating said first mould half from said second mould half,
whereby said contact lens remains adjacent said second mould half;
**characterised in that**:-
said predetermined amount of thermal infra-red energy is applied by means comprising:-
at least one thermal infra-red emitter source (210a; 210b); and
at least one reflector means (208a; 208b) disposed in energy channelling relation between said at least one thermal infra-red emitter source and said first mould half.

23. The method of claim 22, which is put into operation using the apparatus of any one of claims 1 to 21.

## Patentansprüche

1. Vorrichtung zum Entformen oder Entfernen einer Kontaktlinse (5), die zwischen einer vorderen und einer hinteren Krümmungsformhälfte (2, 4), die einander zugeordnet sind, nach einer Formgebung und einem Trocknungsvorgang der Linse gebildet ist, wobei jede Formhälfte einen gekrümmten Mittelabschnitt (3) und einen ringförmigen Flanschabschnitt (8, 9) aufweist, wobei die Vorrichtung umfaßt:
(a) eine Einrichtung (200a, 200b), durch die eine vorbestimmte Menge infraroter Wärmeenergie der hinteren Form mitteilbar ist, um einen Wärmegradienten zwischen der hinteren Formhälfte und der daneben liegenden Linse hervorzurufen; und
(b) eine Einrichtung (302, 303, 304; 150; 249, 252, 253, 255) zum Trennen der zugeordneten hinteren und vorderen Formhälfte;
**dadurch gekennzeichnet, daß**:
die Einrichtung zum Mitteilen der infraroten Ausstrahlenergie umfaßt:
zumindest eine infrarote Wärmeausstrahlquelle (210a; 210b); und
zumindest einen Reflektor (208a; 208b), der in einer energiekanalisierenden Anordnungsbeziehung zwischen der mindestens einen infraroten Wärmeausstrahlquelle und der hinteren Formhälfte steht.

2. Vorrichtung nach Anspruch 1, bei der die infrarote Wärmeenergie in einem Bereich zwischen 2 und 4 Mikrometern bereitgestellt ist.

3. Vorrichtung nach Anspruch 1 oder 2, bei welcher der wenigstens eine Reflektor eine zylindrische Form aufweist.

4. Vorrichtung nach Anspruch 1 oder 2, bei welcher der wenigstens eine Reflektor einen sich verjüngenden Reflektorhohlraum umfaßt.

5. Vorrichtung nach Anspruch 4, die eine Wellenleiter-Öffnung oder Düse (207) umfaßt, die zwischen dem Reflektorhohlraum und der hinteren Formhälfte angeordnet ist.

6. Vorrichtung nach Anspruch 5, bei der die Düse federvorgespannt ist, um einen elastischen Kontakt mit der hinteren Formhälfte bereitzustellen.

7. Vorrichtung nach Anspruch 5 oder 6, die ein Luftkühlsystem (211, 313) umfaßt, die zum Beibehalten der Temperatur der Düse unterhalb des Schmelzpunkts der hinteren Formhälfte vorgesehen ist.

8. Vorrichtung nach einem der Ansprüche 5 bis 7, bei der die Düse einen Durchmesser aufweist, der Wärme wirksam zur hinteren Formhälfte direkt leitet, die benachbart einer darunter ausgebildeten Kontaktlinse liegt, und die den Rest der Form vor Wärme abschirmt, wobei irgendein Abschnitt der hinteren Formhälfte einen HEMA-Ring aufweist, der daran haftet.

9. Vorrichtung nach einem der Ansprüche 1 bis 8, bei der eine Innenfläche des wenigstens einen Reflektors eine reflektierende Metallschicht umfaßt, vorzugsweise aus Gold oder Aluminium.

10. Vorrichtung nach einem der Ansprüche 1 bis 9, bei der die Einrichtung zum Trennen einen ersten Satz Elemente (303; 162, 164; 252, 253) zum Greifen des ringförmigen Flanschabschnitts (8) der vorderen Krümmungsformhälfte (2) und zum ortsfesten Halten derselben und einen zweiten Satz Elemente (302; 170a, b, c; 255) zum Greifen des ringförmigen Flanschabschnitts (9) der hinteren Formhälfte (4) umfaßt, um die hintere Formhälfte von der zugehörigen vorderen Formhälfte anzuheben und zu entfernen.

11. Vorrichtung nach Anspruch 10, bei welcher der zweite Satz (255) Elemente die hintere Formhälfte relativ zur zugehörigen vorderen Formhälfte gleichzeitig anheben und drehend vorspannen kann.

12. Vorrichtung nach Anspruch 10 oder 11, bei der die Einrichtung zum Trennen Trennkeile und/oder eine Greif- und Anhebeeinrichtung und/oder eine Aufstemmeinrichtung umfaßt.

13. Vorrichtung nach einem der Ansprüche 10 bis 12, bei welcher:
der erste Satz Elemente eine umgedrehte T-Stange (162; 253) und einen ersten Satz mehrerer Stemm- oder Einsteckfinger (164; 252) zum Greifen des ringförmigen Flanschabschnitts der vorderen Formhälfte und zum ortsfesten Halten desselben umfaßt; und
der zweite Satz Elemente einen zweiten Stemm- oder Einsteckfinger (170a, b, c; 255) umfaßt, die der zugehörigen hinteren Formhälfte eine Vorspannung mitteilen.

14. Vorrichtung nach Anspruch 13, bei der die T-Stange und der erste Satz Stemmfinger die vordere Formhälfte ortsfest halten.

15. Vorrichtung nach einem der Ansprüche 12 bis 14, bei der untere Zwischenscheiben zum Greifen und ortsfesten Halten der vorderen Formhälfte seitlich angeordnet sind.

16. Vorrichtung nach Anspruch 15, bei der obere Zwischenscheiben den ringförmigen Flanschabschnitt der hinteren Formhälfte greifen und anheben.

17. Vorrichtung nach Anspruch 15 oder 16, bei der die Zwischenscheiben jeweils einen gekrümmten Greifrand umfassen, der eine Ausbuchtung darin aufweist, die ein U-förmiges Aufstemmwerkzeug bildet.

18. Vorrichtung nach einem der Ansprüche 15 bis 17, bei der jeder Satz oberer und unterer Trennzwischenscheiben ein dünnes, flaches Teil umfaßt, das mehrere sich nach außen erstreckende Stemm- oder Einsteckfinger aufweist.

19. Vorrichtung nach einem der Ansprüche 15 bis 18, bei welcher die Sätze oberer und unterer Trennzwischenscheiben zueinander in einer Sandwich-Anordnung liegen, um zwischen den ringförmigen Flanschabschnitten eingebracht zu werden, und trennbar sind, um die zueinander gehörenden vorderen und hinteren Formhälften zu trennen.

20. Vorrichtung nach einem der Ansprüche 12 bis 19, bei der wenigstens eine Greif- und Anhebeeinrichtung den ringförmigen Flanschabschnitt der hinteren Formhälften greift und die hintere Formhälfte anhebt.

21. Vorrichtung nach einem der Ansprüche 1 bis 20, bei der mehrere zueinander gehörende vordere und hintere Formhälften vorgesehen sind, die zu einer regelmäßigen Matrix auf einer Palette angeordnet sind, und die ein Einrichtung zum Mitteilen eines Wärmegradianten und die Einrichtung zum Trennen auf jedes der Paare zugeordnete vorderer und hinterer Formhälften einwirkt.

22. Verfahren zum Entformen oder Trennen wenigstens eines Satzes zueinander gehörender erster und zweiter Kontaktlinsenformhälften (2, 4) nach dem Bilden einer Kontaktlinse (5) dazwischen, bei dem:
eine differenzielle Ausdehnung zwischen der ersten Formhälfte und der Kontaktlinse vorgesehen wird, indem eine vorbestimmte Menge infraroter Wärmeenergien der ersten Formhälften mitgeteilt wird, wodurch ein Aneinanderhaften gelöst wird; und
die erste Formhälfte von der zweiten Formhälfte getrennt wird;
wodurch die Kontaktlinse benachbart der zweiten Formhälfte verbleibt;
**dadurch gekennzeichnet, daß** die vorbestimmte Menge infraroter Wärmeenergie durch eine Einrichtung mitgeteilt wird, die umfaßt:
zumindest eine infrarote Wärmeausstrahlquelle (210a; 210b); und
wenigstens einen Reflektor (208a; 208b), der in einer energiekanalisierenden Anordnungsbeziehung zwischen der wenigstens einen Infrarotausstrahlquelle und der ersten Formhälfte steht.

23. Verfahren nach Anspruch 22, welches mittels der Vorrichtung gemäß einem der Ansprüche 1 bis 21 betrieben wird.

## Revendications

1. Appareil pour démouler une lentille de contact (5) formée entre des demi-moules incurvés positif et négatif (2, 4) après formation et durcissement de ladite lentille, chaque dit demi-moule ayant une partie centrale arquée (3) et une partie de bride annulaire (8, 9), ledit appareil comprenant :
(a) un moyen (200a, 200b) pour appliquer une quantité prédéterminée d'énergie infrarouge thermique audit demi-moule négatif pour créer un gradient thermique entre ledit demi-moule négatif et la lentille en dessous de celui-ci ; et
(b) des moyens (302, 303, 304 ; 150 ; 249, 252, 253, 255) pour séparer lesdits demi-moules positif et négatif correspondants ;
**caractérisé en ce que** :
lesdits moyens pour appliquer ladite énergie émettrice d'infrarouge thermique comprennent :
- au moins une source émettrice d'infrarouge thermique (210a ; 210b) ; et
- au moins un moyen réflecteur (208a ; 208b) disposé en relation de canalisation d'énergie entre ladite au moins une source émettrice d'infrarouge thermique et ledit demi-moule négatif.

2. Appareil selon la revendication 1, dans lequel l'énergie à infrarouge thermique fournie a une longueur d'onde comprise entre 2 et 4 micromètres.

3. Appareil selon la revendication 1 ou 2, dans lequel ledit au moins un moyen réflecteur possède une forme cylindrique.

4. Appareil selon la revendication 1 ou 2, dans lequel ledit au moins un moyen réflecteur inclut une cavité de réflecteur conique.

5. Appareil selon la revendication 4, comprenant de plus une corne (207) disposée entre ladite cavité de réflecteur et ledit demi-moule négatif.

6. Appareil selon la revendication 5, dans lequel ladite corne est sollicitée par un ressort pour fournir un contact élastique avec ledit demi-moule négatif.

7. Appareil selon la revendication 5 ou 6, comprenant de plus un système de refroidissement à air (211, 213) prévu pour maintenir la température de ladite corne au-dessous du point de fusion du demi-moule négatif.

8. Appareil selon l'une quelconque des revendications 5 à 7, dans lequel ladite corne a un diamètre qui dirige efficacement la chaleur vers le demi-moule négatif adjacent à une lentille de contact formée dessous celui-ci, et protège le reste du moule de la chaleur, incluant toute partie dudit demi-moule négatif sur lequel est collé un anneau HEMA.

9. Appareil selon l'une quelconque des revendications 1 à 8, dans lequel une surface interne dudit au moins un moyen de réflecteur comprend une couche métallique réfléchissante, de préférence, d'or ou d'aluminium.

10. Appareil selon l'une quelconque des revendications 1 à 9, dans lequel ledit moyen de séparation inclut un premier jeu d'éléments (303 ; 162, 164 ; 252, 253) pour venir en prise avec la partie de bride annulaire (8) dudit demi-moule incurvé positif (2) et maintenir celui-ci en position fixe, et un second jeu d'éléments (302 ; 170a, b, c ; 255) pour venir en prise avec la partie de bride annulaire (9) dudit demi-moule incurvé négatif (4) pour relever et retirer le demi-moule négatif du demi-moule positif correspondant.

11. Appareil selon la revendication 10, dans lequel ledit deuxième jeu (255) des éléments est adapté pour solliciter, simultanément, en élévation et en rotation le demi-moule positif par rapport au demi-moule positif correspondant.

12. Appareil selon la revendication 10 ou 11, dans lequel ledit moyen de séparation comprend des cales de séparation et/ou des moyens de serrage et de levage et/ou des moyens de levier.

13. Appareil selon l'une quelconque des revendications 10 à 12, dans lequel :
ledit premier jeu d'éléments comprend une barre en T inversée (162 ; 253) et un premier jeu d'une pluralité de doigts de levier (164 ; 252) pour venir en prise avec la partie de bride annulaire dudit demi-moule positif et le maintenir en position fixe ; et
ledit deuxième jeu d'éléments comprend un deuxième jeu de doigts de levier (170a, b, c ; 255) qui transmettent une sollicitation audit demi-moule négatif correspondant.

14. Appareil selon la revendication 13, dans lequel ladite barre en T et ledit premier jeu de doigts de levier maintiennent en position fixe le demi-moule positif.

15. Appareil selon l'une quelconque des revendications 13 à 15, dans lequel les cales inférieures sont disposées latéralement pour venir en prise avec ledit demi-moule positif et le maintenir en position fixe.

16. Appareil selon la revendication 15, dans lequel les cales supérieures viennent en prise avec et lèvent ladite partie de bride annulaire dudit demi-moule négatif.

17. Appareil selon la revendication 15 ou 16, dans lequel lesdites cales incluent chacune un bord en prise incurvé formant une anse à l'intérieur qui forme un levier en forme de U.

18. Appareil selon l'une quelconque des revendications 15 à 17, dans lequel chacun desdits jeux de cales supérieures et inférieures de séparation comprend un élément de lame plate et mince ayant une pluralité de doigts de levier s'étendant vers l'extérieur.

19. Appareil selon l'une quelconque des revendications 15 à 18, dans lequel lesdits jeux de cales supérieures et inférieures de séparation sont pris en sandwich ensemble en vue d'une insertion entre lesdites parties de bride annulaire et sont séparables pour séparer lesdits demi-moules positif et négatif correspondants.

20. Appareil selon l'une quelconque des revendications 12 à 19, dans lequel au moins un dispositif de serrage et de levage est en prise avec ladite partie de bride annulaire dudit demi-moule négatif et lève ledit demi-moule négatif.

21. Appareil selon l'une quelconque des revendications 1 à 20, dans lequel il existe une pluralité de demi-moules positifs et négatifs correspondants qui sont présentés en matrice régulière sur une plaque, et le moyen d'application d'un gradient thermique et le moyen de séparation agissent sur chacune des paires des demi-moules positif et négatif correspondants.

22. Procédé pour démouler au moins un jeu de premier et deuxième demi-moules de lentille de contact correspondants (2, 4) après formation d'une lentille de contact (5) entre eux, consistant à :
- communiquer une dilatation différentielle entre ledit premier demi-moule et ladite lentille de contact en appliquant une quantité prédéterminée d'énergie infrarouge thermique audit premier demi-moule, rompant ainsi l'adhérence mutuelle ; et
- séparer ledit premier demi-moule dudit deuxième demi-moule ;
ainsi ladite lentille de contact reste adjacente audit deuxième demi-moule ;
**caractérisé en ce que** :
ladite quantité prédéterminée d'énergie infrarouge thermique est appliquée par des moyens comprenant :
- au moins une source émettrice d'infrarouge thermique (210a ; 210b) ;
- au moins un moyen de réflecteur (208a ; 208b) disposé en relation de canalisation d'énergie entre ladite au moins une source émettrice d'infrarouge thermique et ledit premier demi-moule.

23. Procédé selon la revendication 22, qui est mis en oeuvre en utilisant l'appareil selon l'une quelconque des revendications 1 à 21.
